# EUROPEAN PATENT SPECIFICATION

(11) **EP 1 613 192 B1**
(45) Date of publication and mention of the grant of the patent: **09.05.2012**
(21) Application number: 04758660.7
(22) Date of filing: 30.03.2004
(51) Int. Cl.: A61G 5/12

(54) **SEATING ASSEMBLY FOR WHEELCHAIRS AND STROLLERS**
SITZANORDNUNG FÜR ROLLSTÜHLE UND KINDERWAGEN
ENSEMBLE SIEGE POUR FAUTEUIL ROULANT ET POUSSETTE

(30) Priority: 31.03.2003 US 403558
(43) Date of publication of application: 11.01.2006
(73) Proprietor: Sunrise Medical HHG Inc., Longmont, Colorado 80503 (US)
(72) Inventor: HANSON, Wayne, H., Bozeman, MT 59715 (US); PHELPS, William, B., Bozeman, MT 59771 (US); SANFORD, Stephen, M., Bozeman, MT 59718-1918 (US)
(74) Representative: Weber-Bruls, Dorothée
(86) International application number: PCT/US2004/009879
(87) International publication number: WO 2004/089269

(56) References cited:
- DE-A1- 19 814 067
- US-A- 94 615
- US-A- 327 775
- US-A- 638 466
- US-A- 780 771
- US-A- 2 423 816
- US-A- 5 884 928

## Description

### TECHNICAL FIELD

This invention relates to a seating mechanism for wheelchairs and similar seating devices, such as strollers in line with the preamble of claim 1. More particularly, the invention pertains to seating mechanisms that maintain the center of gravity of the wheelchair occupant relatively constant with respect to the wheelchair or stroller base, even when the seating system is maneuvered during recline of the seat back.

### BACKGROUND OF THE INVENTION

Wheelchairs and strollers often have a fixed seat consisting of a seating surface and a back frame. The seat and back are typically mounted on a wheelchair base, which for most wheelchairs consists of two rear drive wheels and two front caster wheels. The wheelchair base can be either a manual wheelchair, or a power wheelchair, in which case the drive wheels will be motorized. The seating surface is usually either horizontal or slightly tilted back, with the front edge of the seating surface slightly higher than the rear edge of that surface. If the wheelchair user sits in the same position in a wheelchair for a long period of time, pressure is continuously applied to the tissue on the portion of the user's body (buttocks, legs, and/or back) that is bearing the user's weight in that position. Blood circulation to that tissue will be reduced, and ulcers or other problems can result. Similar seating problems are present for those who need to spend long periods of time in a stroller.

To avoid these problems, it is advantageous for people sitting in wheelchairs and strollers to shift their body weight from time to time. This is often accomplished by tilting the seat portion of the wheelchair or stroller backwards so that the user's weight is shifted away from the pressure points on the user's body. Also, the user's weight can be shifted by reclining the back frame. Reclining the seat back allows some of the wheelchair user's weight to be borne by the user's back, thereby reducing the weight on the user's buttocks. Also, reclining the seat back allows the user to open and close the hip angle, thereby enabling the user to assume or be placed in both active and resting positions. This makes it possible for the user to be more comfortable in a multiplicity of activities.

One of the characteristics of wheelchairs and strollers that have a recline capability, or both a tilt and recline capability, is that by reclining the seat back, the wheelchair or stroller user's center of gravity is moved rearward with respect to the wheelchair or stroller base. This shifting of the center of gravity rearwardly unfortunately tends to decrease the stability of the wheelchair or stroller, making it less stable with respect to backwards tipping. Therefore, it would be advantageous if there could be developed wheelchairs and strollers having more stable response or condition in a reclined seat back mode.

DE 198 14 067 A1 discloses a wheelchair in line with the preamble of claim 1, said wheelchair having reclining and tilting capabilities such that a forward movement of a seating shell is coupled with a rearward tilting of a seat back shifting the user's center of gravity forwardly.

### SUMMARY OF THE INVENTION

It is the object of the invention to further develop the known wheelchairs or strollers to have a stable response or condition in a reclined seat back mode.

This object is achieved with a wheelchair or stroller in line with claim 1. Preferred embodiments of the invention are described with claims 2 to 23.

Thus, above object as well as other objects not specifically enumerated are achieved by a wheelchair or stroller with a seating assembly that includes a seating shell base having a forward end and a rearward end, and a back support member mounted at the rearward end of the seating shell base for substantially vertical movement with respect to the seating shell base. An inner seat tray is positioned within the seating shell base and mounted for forward and rearward sliding movement with respect to the seating shell base, the inner seat tray having opposed pivot points. A seat back is pivotally mounted at the pivot points, the seat back being connected to the back support member. Downward movement of the back support member vertically with respect to the seating shell base causes the seat back to pivot at the pivot points, thereby reclining the seat back, and thereby causing the inner seat tray to slide forward with respect to the seating shell base. A seat tray extension is mounted on the inner seat tray in an alterable manner that enables the seat tray extension to be adjusted in the forward and rearward directions with respect to the inner seat tray.

According to this invention it is also beneficial that the seating assembly includes a seating shell base, an inner seat tray positioned within the seating shell base, and a folding seat back having a back plate and pivot arms that are pivotally attached to the inner seat tray, wherein the pivotable attachment enables the seat back to be pivoted to a folded position. A back support member is mounted for selective vertical positioning with respect to the seating shell base, and a seat engaging mechanism is capable of being selectively actuated to engage the folding seat back with the back support member, wherein when the seat engaging mechanism is engaged, the seat back is prevented from folding forward.

According to this invention it is still further beneficial that the seating assembly includes a seating shell base having a forward end and a rearward end, the rearward end of the seating shell base including opposed substantially vertical slots. A back support bar mounted at the rearward end of the seating shell base for substantially vertical movement with respect to the seating shell base, the back support bar having ends extending through the substantially vertical slots. The back support bar includes a locking mechanism at each end of the back support bar to lock the back support bar at any vertical location along the substantially vertical slots in the seating shell base.

An inner seat tray is positioned within the seating shell base and mounted for forward and rearward sliding movement with respect to the seating shell base, the inner seat tray having opposed pivot points. A seat back is pivotally mounted at the pivot points, the seat back being connected to the back support member, wherein downward movement of the back support bar vertically with respect to the seating shell base causes the seat back to pivot at the pivot points, thereby reclining the seat back, and thereby causing the inner seat tray to slide forward with respect to the seating shell base. The connection between the seat back and the back support member is a releasable connection, wherein the release of the seat back from the seat back support member enables the seat back to be folded by pivoting the seat back about the pivot points.

Various objects and advantages of this invention will become apparent to those skilled in the art from the following detailed description of the preferred embodiment, when read in light of the accompanying drawings.

### BRIEF DESCRIPTION OF THE DRAWINGS

Figure 1 is a schematic perspective view of a stroller adapted with a seating assembly according to the invention.
Figure 2 is a schematic view in perspective of the seating assembly of Fig. 1, with the seat back in an unreclined condition.
Figure 3 is a schematic view in perspective of the seating assembly of Fig. 2, with the seat back in a reclined condition.
Figure 4 is schematic exploded view in perspective of the seating assembly of Fig. 2.
Figure 5 is a schematic view in perspective of the seating assembly of Fig. 97 with the seat back in a folded condition.
Figure 6 is a schematic rear view in perspective of the seating assembly of Fig. 2.
Figure 7 is a schematic rear view in perspective of the seating assembly of Fig. 2, showing the unlatching of the release block.
Figure 8 is a schematic view of the stroller shown in Fig. 1, with the seating assembly removed.

### DETAILED DESCRIPTION OF THE INVENTION

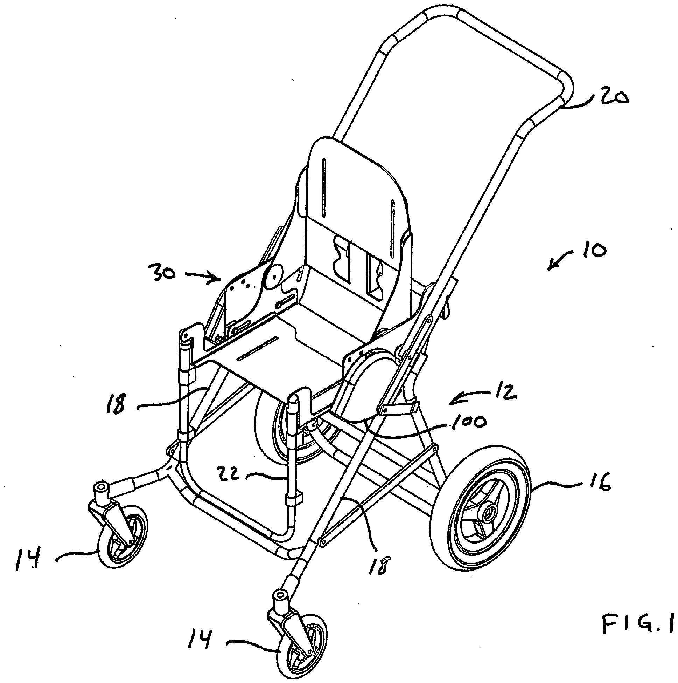

As shown in Figure 1, a stroller indicated generally at 10 is comprised of a stroller base 12, which is mounted for movement on front caster wheels 14 and rear wheels 16. The stroller base 12 includes a frame 18, typically consisting of welded or bolted members, some of which are tubular. The frame 18 extends upwardly to form a handle 20. A leg support bar 22 can be provided. The stroller base 12 supports the seating assembly, indicated generally at 30.

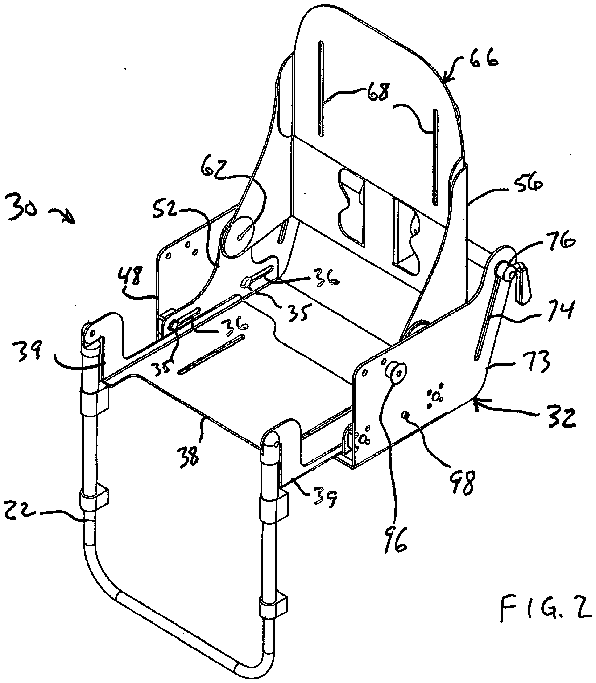

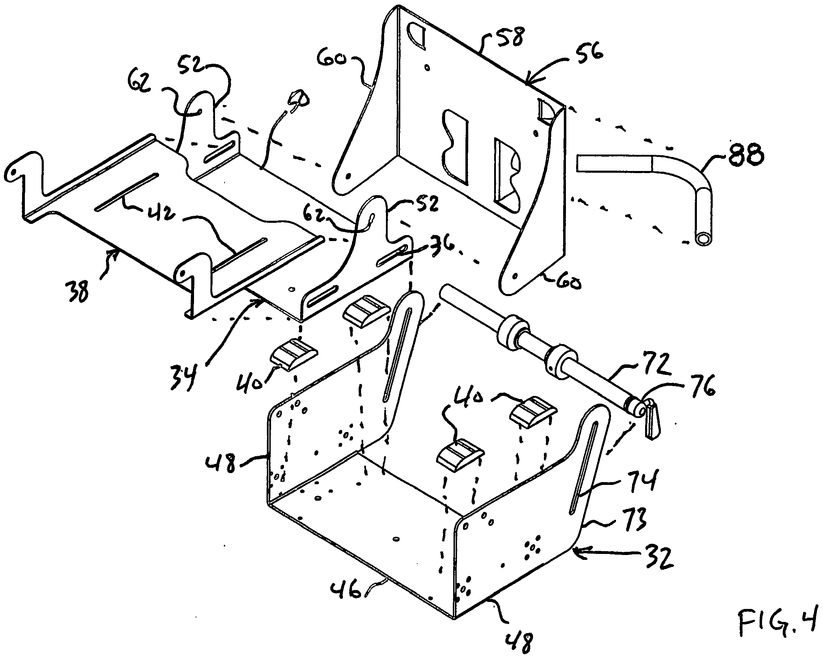

As shown in Figs. 2-4, the seating assembly 30 of the invention includes a seating shell base 32 into which is nested or positioned the inner seat tray 34. The seating shell base 32 is attached to and supported by the stroller base 12. The inner seat tray 34 is secured to the seating shell base 32 in a manner that allows the inner seat tray 34 to slide forwardly and rearwardly with respect to the seating shell base 32.

A seat tray extension 38 is mounted for attachment to the inner seat tray 34 for the purpose of enabling a length adjustment of the seating assembly 30 to accommodate growth of the user of the stroller. Optionally, the seat tray extension 38 can be provided with mounting arms 39 for mounting the leg support bar 22.

The mounting of the inner seat tray 34 within the seating shell base 32 is accomplished by means of bolts 35 extending though slots 36 in the inner seat tray 34 and through bolt holes 33 in seating shell base 32. Any suitable fastening means can be used, but the preferred fastener is a screw in combination with a nylon washer, not shown. Nylon side guides 37 are positioned between the inner seat tray and the seating shell base 32 to facilitate guided, sliding movement of the inner seat tray 34 forwardly and rearwardly with respect to the seating shell base 32. Preferably, the inner seat tray 34 is mounted for forward and rearward sliding movement on nylon bottom guides 40 that are positioned beneath the inner seat tray. In a preferred embodiment of the invention, the primary guiding function is carried out by the nylon side guides 37, with the bolts 35 extending through the slots 36 and the nylon side guides 37 while the bottom nylon glides 40 merely provide a low friction surface for supporting the weight of the stroller user. Although nylon is a preferred material for the bottom guides 40 and sides 37, slide-assisting members of other materials or configurations can be used.

The seat tray extension 38 is provided with slots 42 that are oriented in a forward/rearward direction. Bolts, not shown, fit through the slots 42 in the seat tray extension 38 to enable it to be fixed at an appropriate position to accommodate the physical features of the particular stroller user, and to enable adjustment as necessary for the growth of the stroller user. Other fastening arrangements, not shown, can be used for attaching the seat tray extension 38 to the inner seat tray 34. It can be seen that the seat tray extension 38 is mounted on the inner seat tray 34 in an alterable manner that enables the seat tray extension 38 to be adjusted in the forward and rearward directions with respect to the inner seat tray 34.

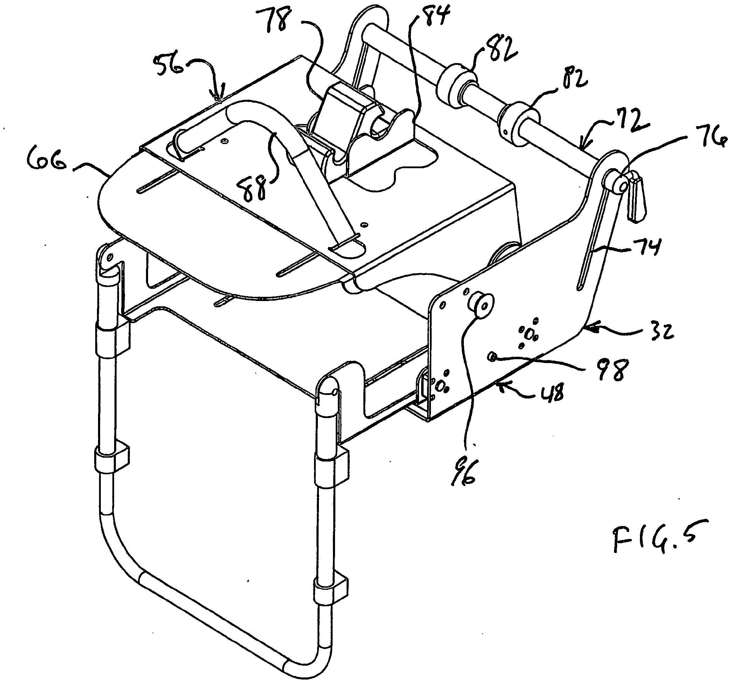

The seating shell base 32 has a bottom wall 46 and side walls 48, all of which can be made of molded plastic, aluminum sheet, or any other suitable material. The inner seat tray 34 is provided with a bottom tray surface 50 and opposed upwardly extending seat tray arms 52. Mounted to the seating shell base 32 is the folding seat back 56. The folding seat back 56 is comprised of a back plate 58 and seat back pivot arms 60, which are pivotally attached to the upwardly extending seat tray arms 52 at pivot points 62. Preferably, a nylon washer is inserted between the seat back pivot arms 60 and the seat tray pivot arms 52. The pivotal mounting of the folding seat back 56 enables the seat back 56 to be folded forward into a relatively compact folded configuration, shown in Fig. 5, that makes the stroller 10 easier to transport when not occupied by the stroller user. The seat back pivot points 62 are preferably positioned relatively high on the seat tray arms 52 to enable the seat back 56 to fold into a compact configuration. In a preferred embodiment of the invention, the pivot points 62 are positioned so that they coincide with the anatomic pivot point of the user's body for the greatest conformance to the user's body during the recline of the seat back 56.

The folding seat back 56 is optionally provided with a seat back extension 66 that can be adapted with vertical slots 68 that enable the seat back extension 66 to be raised vertically with respect to the folding seat back 56 to accommodate the positioning needs of the stroller user. A back cushion, not shown, can be attached to the seat back extension 66 for the comfort of the stroller user. Further, a seat cushion, also not shown, can be used on the seat tray extension 38 for improved comfort of the user.

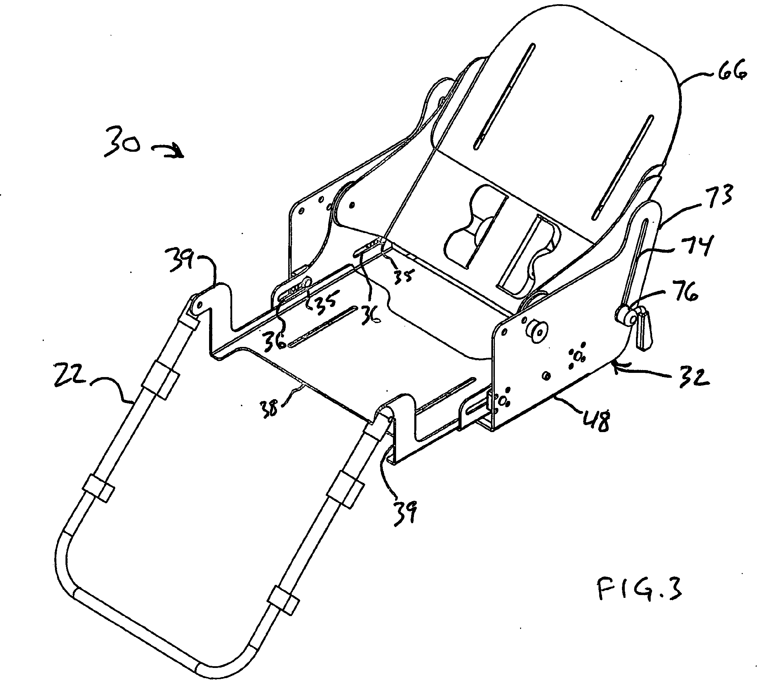

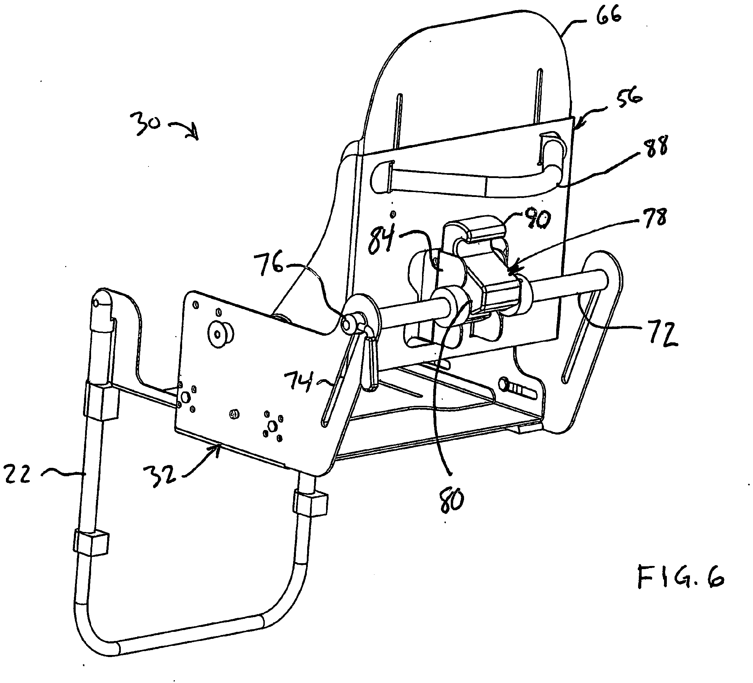

As shown in Figs. 5-7, at the rear of the seating assembly 30 is a back support bar 72. The rearward end 73 of the side walls 48 of the seating shell base 32 are provided with slots 74, and the ends of the back support bar 72 are connected to the seating shell base 32 by their insertion through the slots 74. Although a back support bar 72 is shown, it is to be understood that any other structural back support member, such as a link or a block, not shown, for connecting the seat back 56 to the seating shell base 32 can be used. Locking clamps 76 attached to the ends of the back support bar 72 secure the back support bar 72 to the seating shell base 32. The locking clamps 76 allow the back support bar 72 to be positioned at any vertical location along the slots 74. Other locking mechanisms, such as a wing nut, can be used for securing the back support bar 72 at a particular vertical location in the slots 74. The slots 74 are substantially vertical, which for purposes of the present invention means literally vertical or oriented at a slight angle to the vertical. Preferably the slots are at an angle within the range of from about 5 degrees to about 20 degrees to the vertical. It is further preferred that the slots 74 are angled at a forward angle, which means that the back support bar 72 will be moved forward as the seat back 56 reclines and as the back support member 72 slides downwardly in the slots 74, as is shown in Figs. 2 and 3.

Although straight slots 74 are shown, curved slots, not shown, can also be used. The curved slots would change the geometry of the recline of the seat back and the pivoting of the seat back about the pivot points 62.

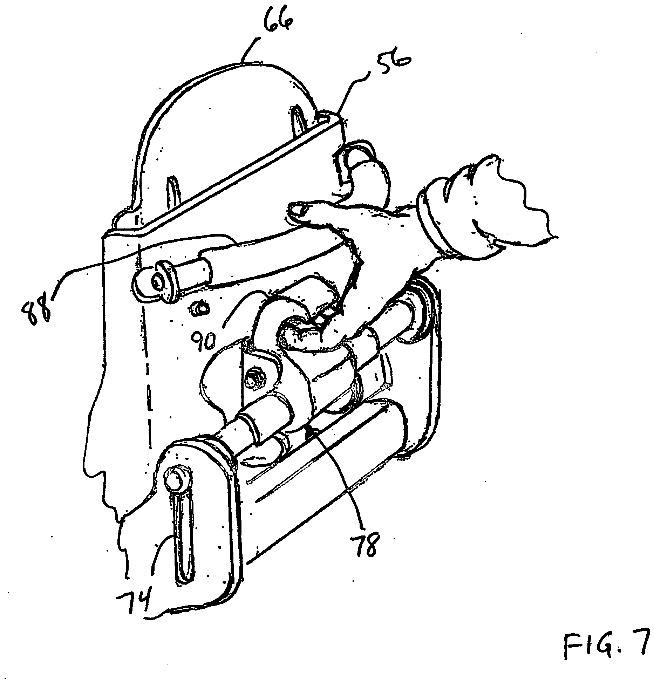

The folding seat back 56 is connected to the back support bar 72 by means of a release block 78 that preferably has a concave or hook-shaped component 80 adapted to mate with or grasp the support bar 72 to form a releasable connection. When the release block 78 is engaged with the support bar 72, the folding seat back 56 is prevented from folding forward. The back support bar 72 is provided with bar guides 82 which define a central portion of the back support bar 72 which is engaged by the hook-shaped component 80 of the release block 78. The bar guides 82 help align the folding seat back 56. The release block 78 can be attached to the folding seat back 56 by any suitable means, such as, for example, bracket 84. Preferably, the release block 78 is pivotally or slidably mounted so that it can be readily lifted up by hand as shown in Fig. 7. Optionally, a spring, not shown, can be provided to bias the release block 78 downwardly, requiring an upward force to release the connection with the support bar 72, and thereby providing an automatic locking of the seat back in an unfolded condition. The release block can be made of any material, such as nylon.

The folding seat back 56 is preferably provided with a handle grip 88 that can be grasped to fold the seat back forward. The release block 78 is preferably adapted with a concave lift handle 90 to enable the release block 78 and handle grip 88 to be grasped with one hand, as shown in Fig. 7, for simultaneously releasing the release block 78 from the back support bar 72 and folding the seat back 56 forward. Although a release block 78 is shown to connect the seat back 56 with the back support bar 72, other seat engaging mechanisms capable of being selectively actuated can also be used.

The slots 74 in the seating shell base 32 are oriented at a rearward angle to the vertical so that as the back support bar 72 is lowered in the slots 74, from the upright position shown in Fig. 2 to the recline position shown in Fig. 3, the support bar 72 will be moved forwardly and downwardly. Since the folding seat back 56 is normally connected to the back support bar 72 through the release block 78, the seat back 56 will be rotated as the back support bar is moved down in the slots 74. This has the effect of moving the inner seat tray 34 forward because of the hinged convection at the pivot points 62 between the seat back pivot arms 60 and the seat tray arms 52. As shown in Fig. 2, when the seat back 56 is in the upright position, the bolts 35 connecting the inner seat tray 34 to the seating shell base 32 are in the forward portion of the inner tray side slots 36. In contrast, when the seat back 56 is in the recline position, the bolts 35 connecting the inner seat tray 34 to the seating shell base 32 are in the rearward portion of the inner tray side slots 36. The forward movement of the inner seat tray 34 during recline of the seat back 56 moves the user's body forward, thereby counteracting the tendency of the center of gravity to move rearwardly with the recline of the seat back. The geometry of the various components of the seating assembly 30 enables the inner seat tray 34 to move forward at approximately the same rate that the center of gravity would otherwise move rearwardly with the recline of the seat back 56 so that there is very little forward or rearward movement of the center of gravity of the stroller or of the user of the stroller. Preferably, the movement of the center of gravity is less than a total of one inch of forward and rearward movement.

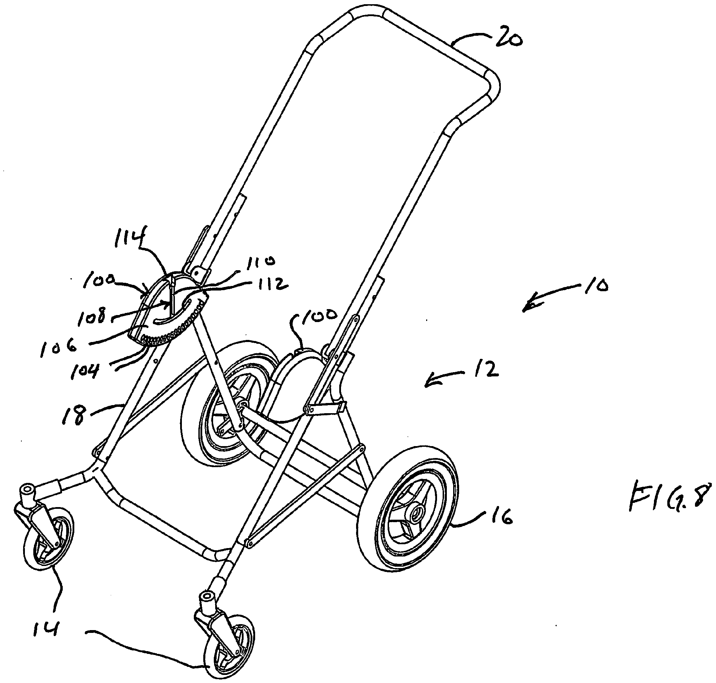

The attachment of the seating shell base 32 to the stroller base 12 can be by bolts or any other suitable attachment. However, in a preferred embodiment of the invention, the seating shell base 32 is provided with a pivot post 96 and guide pin 98, as shown in Fig. 2. The frame 18 of the stroller base 12 can include a tilt-in-space block 100, as shown in Fig. 8. The tilt-in-space block 100 includes a plurality of apertures or cavities 104 arranged in an arc-like pattern on the side wall 106 of the tilt- in-space block 100. The tilt-in-space block 100 also includes a guide slot 108. The guide slot 108 is configured to receive the pivot post 96 and the guide pin 98.

Preferably, the guide slot 108 is substantially T-shaped with a generally straight upper portion 110 and an arc-shaped lower portion 112. The uppermost portion of the guide slot 108 is the pivot post cradle 114 where the pivot post 96 is seated.

To install the seating shell base 32 onto the stroller base 12 after being completely removed from the stroller base 12, the tilt-in-space block pivot post 96 and a guide pin 98 on each side of the seating shell base 32 are aligned with the guide slot 108. Then, the guide pin 98 guided into the upper portion 110 of the guide slot 108 until the guide pin 98 enters the lower portion 112 of the guide slot 108, and the pivot post 96 is seated at the pivot post cradle 114 at the top of the pivot post slot 108.

Latch pins, not shown, can be mounted on the seating shell base 32 for selective engagement with the apertures 104 to set the desired angle of the seating shell base 32 with respect to the stroller base 12. The structure and operation of the tilt-in-space block mounting system is explained in greater detail in U. S. Patent No. 6,086, 086, which is hereby incorporated by reference in its entirety.

Although the invention has been described thus far as being connected with a stroller, it is to be understood that the invention can be used with manual or power wheelchairs, as well as other seating devices such as swings, and stationary seating devices, such as indoor bases.

The principle and mode of operation of this invention have been described in its preferred embodiments. However, it should be noted that this invention may be practiced otherwise than as specifically illustrated and described without departing from its scope.

## Claims

1. Wheelchair or stroller (10) having a frame (18) forming a handle (20) and having a seating assembly (30) comprising:
a seating shell base (32) having a forward end and a rearward end;
a seat back (56);
a back support member (72) mounted at the rearward end of the seating shell base (32) for substantially vertical movement with respect to the seating shell base (32); and
an inner seat tray (34) positioned within the seating shell base (32) and mounted for forward and rearward sliding movement with respect to the seating shell base (32), the inner seat tray (34) having opposed pivot points (62);
with the seat back (56) being pivotally mounted at the pivot points (62) being connected to the back support member (72), wherein downward movement of the back support member (72) vertically with respect to the seating shell base (32) causes the seat back (56) to pivot at the pivot points (62), thereby reclining the seat back (56), and thereby causing the inner seat tray (38) to slide forward with respect to the seating shell base (32), **characterized by**
a seat tray extension (38) mounted on the inner seat tray (34) in an alterable manner that enables the seat tray extension (38) to be adjusted in the forward and rearward directions with respect to the inner seat tray (34).

2. The wheelchair or stroller of claim 1 in which the rearward end of the seating shell base (32) includes opposed substantially vertical slots (74), and in which the back support member (72) is a back support bar having ends extending through the substantially vertical slots, the back support bar being mounted for vertical movement with respect to the seating shell base (32).

3. The wheelchair or stroller of claim 2 including a locking mechanism at each end of the back support bar (72) to lock the back support bar at any vertical location along the substantially vertical slots (74) in the seating shell base (32).

4. The wheelchair or stroller of claim 2 in which the substantially vertical slots (74) are oriented at an angle to the vertical, with the angle being within the range of from about 5 degrees to about 20 degrees.

5. The wheelchair or stroller of claim 1 in which the connection between the seat back (56) and the back support member (72) is a releasable connection, wherein the release of the seat back (56) from the seat back support member (72) enables the seat back (56) to be folded by pivoting the seat back (72) about the pivot points (62).

6. The wheelchair or stroller of claim 1 in which the inner seat tray (34) has upwardly extending arms (52) that include the pivot points (62).

7. The wheelchair or stroller of claim 6 in which the seat back (56) is comprised of a back plate seat (58) and back pivot arms (60) that are pivotally attached to the upwardly extending seat tray arms (52) at the pivot points (62).

8. The wheelchair or stroller of claim 1 in which the seat back (56) includes a release block (78) that connects the seat back (56) to the back support member (72), the release block (78) being movable with respect to the seat back (56) to release the seat back (56) from the back support member (72).

9. The wheelchair or stroller of claim 8 in which the release block (78) is slidable with respect to the seat back (56).

10. The wheelchair or stroller of claim 9 in which the release block (78) includes a handle (90).

11. The wheelchair or stroller of claim 8 in which the support member (72) is a support bar, and in which the release block (78) has a concave component adapted to mate with the support bar (72) to lock the seat back in an unfolded position.

12. The wheelchair or stroller of claim 11 in which the release block (78) is slidable with respect to the seat back (56), and in which the release block (78) includes a handle (90).

13. The wheelchair or stroller of claim 1 including slots (36) in the inner seat tray (34) that enable the inner seat tray (34) to be mounted to the seating shell base (32) while allowing the inner seat tray (34) to slide in forward and rearward directions with respect to the seating shell base (32).

14. A wheelchair or stroller of claim 1 in which the seating shell base (32) includes opposed substantially vertical slots (74), wherein the substantially vertical slots are oriented at an angle to the vertical, with the angle being within the range of from about 5 degrees to about 20 degrees; the back support member (72) has ends extending through the substantially vertical slots (74) of the seating shell base (32) for substantially vertical movement with respect to the seating shell base (32); and
downward movement of the back support member (72) vertically in the substantially vertical slots (74) with respect to the seating shell base (32) causes the seat back (56) to pivot at the pivot points (62), thereby reclining the seat back (56), and thereby causing the inner seat tray (34) to slide forward with respect to the seating shell base (32).

15. The wheelchair or stroller of Claim 14 wherein the slots (74) are angled at a forward angle such that the back support member (72) moves forward as the seat back (56) reclines and as the back support member (72) slides downwardly in the slots (74).

16. The wheelchair or stroller of Claim 15 wherein the seat back (56) is a folding seat back having a back plate (58) and pivot arms (60) that are pivotally attached to the inner seat tray (34), wherein the pivotable attachment enables the seat back (56) to be pivoted to a folded position.

17. The wheelchair or stroller of Claim 16 further comprising a seat engaging mechanism capable of being selectively actuated to engage the folding seat back (56) with the back support member (72), wherein when the seat engaging mechanism is engaged, the seat back (56) is prevented from folding forward.

18. The wheelchair or stroller of claim 17 in which the seat engaging mechanism is a release block (78) that connects the seat back (56) to the back support member (72), the release block (78) being movable with respect to the seat back (56) to release the seat back (56) from the back support member (72), the seat back (56) including a handle grip (88) that can be grasped to fold the seat back (56) forward, and the release block (78) including a release block handle (90), with the handle grip (88) and the release block handle (90) being positioned to enable the handle grip and the release block (78) handle to be grasped with one hand for simultaneously releasing the release block from the back support member (72) and folding the seat back (56) forward.

19. The wheelchair or stroller of claim 18 in which the release block (78) is slidable with respect to the seat back (56).

20. The wheelchair or stroller of claim 18 in which the back support member (72) is a support bar, and in which the release block (78) has a concave component adapted to mate with the support bar to lock the seat back (56) in an unfolded position.

21. The wheelchair or stroller of claim 18 in which the release block (78) is slidable with respect to the seat back (56), and in which the release block (78) includes a handle (90).

22. A wheelchair or stroller of claim 1 in which the rearward end of the seating shell base (32) includes opposed substantially vertical slots (74);
the back support member is a back support bar (72) having ends extending through the substantially vertical slots (74), the back support bar (72) including a locking mechanism at each end of the back support bar (72) to lock the back support bar (72) at any vertical location along the substantially vertical slots (74) in the seating shell base (32);
the substantially vertical slots (74) are oriented at an angle to the vertical, with the angle being within the range of from about 5 degrees to about 20 degrees; and
the connection between the seat back (56) and the back support member (72) is a releasable connection, wherein the release of the seat back (56) from the seat back support member (72) enables the seat back (56) to be folded by pivoting the seat back (56) about the pivot points (62).

23. The wheelchair or stroller of claim 22 including a release block (78) that connects the seat back (56) to the back support member (72), the release block (78) being movable with respect to the seat back (56) to release the seat back (56) from the back support member (72), the seat back (56) including a handle grip (88) that can be grasped to fold the seat back (56) forward, and the release block (78) including a release block handle (90), with the handle grip (88) and the release block handle (90) being positioned to enable the handle grip (88) and the release block handle (90) to be grasped with one hand for simultaneously releasing the release block (78) from the back support member (72) and folding the seat back (56) forward.

## Patentansprüche

1. Rollstuhl oder Kinderwagen (10) mit einem Rahmen (18), der einen Griff (20) ausbildet, und einer Sitzanordnung (30), umfassend:
einen Sitzschalenboden (32) mit einem vorderen Ende und einem hinteren Ende;
eine Sitzlehne (56);
ein am hinteren Ende des Sitzschalenbodens (32) befestigtes Lehnenhalterungsglied (72) zur im Wesentlichen vertikalen Bewegung in Bezug auf den Sitzschalenboden (32) und
eine innerhalb des Sitzschalenbodens (32) angeordnete und zur vor- und rückwärtigen Gleitbewegung in Bezug auf den Sitzschalenboden (32) befestigte innere Sitzmulde (34), wobei die innere Sitzmulde (34) einander gegenüberliegende Schwenkpunkte (62) aufweist;
wobei die Sitzlehne (56) schwenkbar an den mit dem Lehnenhalterungsglied (72) verbundenen Schwenkpunkten (62) befestigt ist, wobei eine in Bezug auf den Sitzschalenboden (32) **vertikale Abwärtsbewegung des** Lehnenhalterungsglieds (72) bewirkt, dass die Sitzlehne (56) an den Schwenkpunkten (62) geschwenkt wird, wodurch die Sitzlehne (56) geneigt wird, und dass dadurch die innere Sitzmulde (38) in Bezug auf den Sitzschalenboden (32) nach vorn gleitet, **gekennzeichnet durch** eine Sitzmuldenerweiterung (38), die in änderbarer Weise an der inneren Sitzmulde (34) angebracht ist, sodass sie nach vorn und nach hinten in Bezug auf die innere Sitzmulde (34) verstellbar ist.

2. Rollstuhl oder Kinderwagen nach Anspruch 1, wobei das hintere Ende des Sitzschalenbodens (32) einander gegenüberliegende, im Wesentlichen vertikale Schlitze (74) **umfasst und wobei das Lehnenhalterungsglied** (72) eine Lehnenhalterungsstange ist, deren Enden sich durch die im Wesentlichen vertikalen Schlitze erstecken, wobei die Lehnenhalterungsstange zur vertikalen Bewegung in Bezug auf den Sitzschalenboden (32) angebracht ist.

3. Rollstuhl oder Kinderwagen nach Anspruch 2, umfassend einen Sicherungsmechanismus an jedem Ende der Lehnenhalterungsstange (72) zum Sichern der Lehnenhalterungsstange in einer jeglichen vertikalen Position entlang der im Wesentlichen vertikalen Schlitze (74) im Sitzschalenboden (32).

4. Rollstuhl oder Kinderwagen nach Anspruch 2, wobei die im Wesentlichen vertikalen Schlitze (74) in einem Winkel zur Vertikalen ausgerichtet sind, der im Bereich von etwa 5 Grad bis etwa 20 Grad liegt.

5. Rollstuhl oder Kinderwagen nach Anspruch 1, wobei die Verbindung zwischen der Sitzlehne (56) und dem Lehnenhalterungsglied (72) eine lösbare Verbindung ist, wobei das Lösen der Sitzlehne (56) vom Sitzlehnenhalterungsglied (72) das Zusammenklappen der Sitzlehne (56) durch Schwenken der Sitzlehne (72) um die Schwenkpunkte (62) ermöglicht.

6. Rollstuhl oder Kinderwagen nach Anspruch 1, wobei die innere Sitzmulde (34) sich nach oben erstreckende Arme (52) aufweist, welche die Schwenkpunkte (62) umfassen.

7. Rollstuhl oder Kinderwagen nach Anspruch 6, wobei die Sitzlehne (56) einen Lehnenplattensitz (58) und Lehnenschwenkarme (60), die an den Schwenkpunkten (62) schwenkbar an den sich nach oben erstreckenden Sitzmuldenarmen (52) befestigt sind, umfasst.

8. Rollstuhl oder Kinderwagen nach Anspruch 1, wobei die Sitzlehne (56) einen Freigabeblock (78) umfasst, der die Sitzlehne (56) mit dem Lehnenhalterungsglied (72) verbindet, wobei der Freigabeblock (78) in Bezug auf die Sitzlehne (56) bewegbar ist, um die Sitzlehne (56) vom Lehnenhalterungsglied (72) zu lösen.

9. Rollstuhl oder Kinderwagen nach Anspruch 8, wobei der Freigabeblock (78) in Bezug auf die Sitzlehne (56) verschiebbar ist.

10. Rollstuhl oder Kinderwagen nach Anspruch 9, wobei der Freigabeblock (78) eine Handhabe (90) umfasst.

11. Rollstuhl oder Kinderwagen nach Anspruch 8, wobei das Halterungsglied (72) eine Halterungsstange ist und wobei der Freigabeblock (78) eine konkave Komponente aufweist, die so gestaltet ist, dass sie zu der Halterungsstange (72) passt, um die Sitzlehne in einer ausgeklappten Position zu sichern.

12. Rollstuhl oder Kinderwagen nach Anspruch 11, wobei der Freigabeblock (78) in Bezug auf die Sitzlehne (56) verschiebbar ist und wobei der Freigabeblock (78) eine Handhabe (90) umfasst.

13. Rollstuhl oder Kinderwagen nach Anspruch 1, umfassend Schlitze (36) in der inneren Sitzmulde (34), die eine Befestigung der inneren Sitzmulde (34) am Sitzschalenboden (32) ermöglichen, wobei die innere Sitzmulde (34) in Bezug auf den Sitzschalenboden (32) vor- und rückwärts gleiten kann.

14. Rollstuhl oder Kinderwagen nach Anspruch 1, wobei der Sitzschalenboden (32) einander gegenüberliegende, im Wesentlichen vertikale Schlitze (74) umfasst und wobei die im Wesentlichen vertikalen Schlitze in einem Winkel zur Vertikalen ausgerichtet sind, der im Bereich von etwa 5 Grad bis etwa 20 Grad liegt,
wobei das Lehnenhalterungsglied (72) Enden aufweist, die sich zur im Wesentlichen vertikalen Bewegung in Bezug auf den Sitzschalenboden (32) durch die im Wesentlichen vertikalen Schlitze (74) des Sitzschalenbodens (32) erstrecken; und
wobei eine vertikale Abwärtsbewegung des Lehnenhalterungsglieds (72) in den im **Wesentlichen vertikalen Schlitzen** (74) in Bezug auf den Sitzschalenboden (32) bewirkt, dass die Sitzlehne (56) an den Schwenkpunkten (62) geschwenkt wird, wodurch die Sitzlehne (56) geneigt wird, und dass dadurch die innere Sitzmulde (34) in Bezug auf den Sitzschalenboden (32) nach vorn gleitet.

15. Rollstuhl oder Kinderwagen nach Anspruch 14, wobei die Schlitze (74) in einem Vorwärtswinkel so angewinkelt sind, dass sich das Lehnenhalterungsglied (72) **nach vorn bewegt, wenn sich die Sitzlehne** (56) neigt und das Lehnenhalterungsglied (72) in den Schlitzen (74) nach unten gleitet.

16. Rollstuhl oder Kinderwagen nach Anspruch 15, wobei die Sitzlehne (56) eine Klappsitzlehne mit einer Lehnenplatte (58) und schwenkbar an der inneren Sitzmulde (34) befestigten Schwenkarmen (60) ist, wobei die schwenkbare Befestigung ermöglicht, dass sich die Sitzlehne (56) in eine zusammengeklappte Position schwenken lässt.

17. Rollstuhl oder Kinderwagen nach Anspruch 16, ferner umfassend einen Sitzeinrastmechanismus, der sich getrennt betätigen lässt, damit die Klappsitzlehne (56) in das Lehnenhalterungsglied (72) einrastet, wobei die Sitzlehne (56) nicht nach vorn klappen kann, wenn der Sitzeinrastmechanismus eingerastet ist.

18. Rollstuhl oder Kinderwagen nach Anspruch 17, wobei der Sitzeinrastmechanismus ein Freigabeblock (78) ist, der die Sitzlehne (56) mit dem Lehnenhalterungsglied (72) verbindet, wobei der Freigabeblock (78) in Bezug auf die Sitzlehne (56) bewegbar ist, um die Sitzlehne (56) vom Lehnenhalterungsglied (72) **zu lösen, wobei die Sitzlehne** (56) einen Handgriff (88) umfasst, der sich betätigen lässt, um die Sitzlehne (56) nach vorn zu klappen, und wobei der Freigabeblock (78) eine Freigabeblockhandhabe (90) aufweist, wobei der Handgriff (88) und die Freigabeblockhandhabe (90) so positioniert **sind, dass sich der Handgriff und die Handhabe** des Freigabeblocks (78) mit einer Hand betätigen lassen, um gleichzeitig den Freigabeblock vom Lehnenhalterungsglied (72) zu lösen und die Sitzlehne (56) nach vom zu klappen.

19. Rollstuhl oder Kinderwagen nach Anspruch 18, wobei der Freigabeblock (78) in Bezug auf die Sitzlehne (56) verschiebbar ist.

20. Rollstuhl oder Kinderwagen nach Anspruch 18, wobei das Lehnenhalterungsglied (72) eine Halterungsstange ist und wobei der Freigabeblock (78) eine konkave Komponente aufweist, die so gestaltet ist, dass sie in die Halterungsstange greift, um die Sitzlehne (56) in einer ausgeklappten Position zu sichern.

21. Rollstuhl oder Kinderwagen nach Anspruch 18, wobei der Freigabeblock (78) in Bezug auf die Sitzlehne (56) verschiebbar ist und wobei der Freigabeblock (78) eine Handhabe (90) umfasst.

22. Rollstuhl oder Kinderwagen nach Anspruch 1, wobei das hintere Ende des Sitzschalenbodens (32) einander gegenüberliegende, im Wesentlichen vertikale Schlitze (74) umfasst;
wobei das Lehnenhalterungsglied eine Lehnenhalterungsstange (72) ist, deren Enden sich durch die im Wesentlichen vertikalen Schlitze (74) erstrecken, wobei die Lehnenhalterungsstange (72) an jedem Ende der Lehnenhalterungsstange (72) einen Sicherungsmechanismus umfasst, um die Lehnenhalterungsstange (72) in einer jeglichen vertikalen Position entlang der im Wesentlichen vertikalen Schlitze (74) im Sitzschalenboden (32) zu sichern;
wobei die im Wesentlichen vertikalen Schlitze (74) in einem Winkel zur Vertikalen ausgerichtet sind, der im Bereich von etwa 5 Grad bis etwa 20 Grad liegt; und
wobei die Verbindung zwischen der Sitzlehne (56) und dem Lehnenhalterungsglied (72) eine lösbare Verbindung ist, wobei das Lösen der Sitzlehne (56) vom Sitzlehnenhalterungsglied (72) ermöglicht, dass sich die Sitzlehne (56) durch Schwenken der Sitzlehne (56) um die Schwenkpunkte (62) zusammenklappen lässt.

23. Rollstuhl oder Kinderwagen nach Anspruch 22, umfassend einen Freigabeblock (78), der die Sitzlehne (56) mit dem Lehnenhalterungsglied (72) verbindet, wobei der Freigabeblock (78) im Verhältnis zur Sitzlehne (56) bewegbar ist, um die Sitzlehne (56) vom Lehnenhalterungsglied (72) zu lösen, wobei die Sitzlehne (56) einen Handgriff (88) umfasst, der sich betätigen lässt, um die Sitzlehne (56) nach vorn zu klappen, und wobei der Freigabeblock (78) eine Freigabeblockhandhabe (90) umfasst, wobei der Handgriff (88) und die Freigabeblockhandhabe (90) so positioniert sind, dass sich der Handgriff (88) und die Freigabeblockhandhabe (90) mit einer Hand betätigen lassen, um gleichzeitig den Freigabeblock (78) vom Lehnenhalterungsglied (72) zu lösen und die Sitzlehne (56) nach vorn zu klappen.

## Revendications

1. Fauteuil roulant ou poussette (10) ayant un châssis (18) formant une poignée (20) et ayant un ensemble de siège (30) comprenant : une base de siège en coquille (32) ayant une extrémité avant et une extrémité arrière ; un dossier (56); un élément de support arrière (72) monté à l'extrémité arrière de la base de siège en coquille (32) ; et un plateau intérieur de siège (34) positionné dans la base de siège en coquille (32) et monté pour se déplacer en coulissant vers l'avant et l'arrière par rapport à la base de siège en coquille (32), le plateau intérieur de siège (34) ayant des points de pivotement opposés (62) ; le dossier (56) étant monté de manière pivotante au niveau des points de pivotement (62) en étant relié à l'élément de support arrière (72), dans lequel le déplacement vers le bas de l'élément de support arrière (72) verticalement par rapport à la base de siège en coquille (32) amène le dossier (56) à pivoter au niveau des points de pivotement (62), en inclinant ainsi le dossier (56), et amenant ainsi le plateau intérieur de siège (38) à coulisser vers l'avant par rapport à la base de siège en coquille (32), **caractérisé par** une extension du plateau de siège (38) monté sur le plateau intérieur de siège (34) d'une manière modifiable qui permet d'ajuster l'extension du plateau de siège (38) dans la direction vers l'avant et vers l'arrière par rapport au plateau intérieur de siège (34).

2. Fauteuil roulant ou poussette selon la revendication 1 dans lequel l'extrémité arrière de la base de siège en coquille (32) comprend des fentes verticales sensiblement opposées (74), et dans lequel l'élément de support arrière(72) est une barre de support arrière ayant des extrémités s'étendant à travers les fentes verticales sensiblement verticales, la barre de support arrière étant montée pour avoir un déplacement vertical par rapport à la base de siège en coquille (32).

3. Fauteuil roulant ou poussette selon la revendication 2 comprenant un mécanisme de blocage à chaque extrémité de la barre de support arrière (72) pour bloquer la barre de support arrière dans tout emplacement vertical le long des fentes sensiblement verticales (74) dans la base de siège en coquille (32).

4. Fauteuil roulant ou poussette selon la revendication 2 dans lequel les fentes sensiblement verticales (74) sont orientées en faisant un angle par rapport à la verticale, l'angle étant dans la plage allant d'environ 5° à environ 20°.

5. Fauteuil roulant ou poussette selon la revendication 1 dans lequel la liaison entre le dossier (56) et l'élément de support arrière (72) est une liaison libérable, la libération du dossier (56) vis-à-vis de l'élément de support arrière (72) de siège permet de plier le dossier (56) en faisant pivoter le dossier (72) autour des points de pivotement (62).

6. Fauteuil roulant ou poussette selon la revendication 1 dans lequel le plateau intérieur de siège (34) a des bras s'étendant vers le haut (52) qui comprennent les points de pivotement (62).

7. Fauteuil roulant ou poussette selon la revendication 6 dans lequel le dossier (56) est constitué d'un siège à plaque arrière (58) et de bras de pivotement arrière (60) qui sont reliés de manière pivotante au bras du plateau de siège s'étendant vers le haut (52) au niveau des points de pivotement (62).

8. Fauteuil roulant ou poussette selon la revendication 1 dans lequel le dossier (56) comprend un bloc de libération (78) qui relie le dossier (56) à l'élément de support arrière (72), le bloc de libération (78) étant mobile par rapport au dossier (56) pour libérer le dossier (56) vis à vis de l'élément de support arrière (72).

9. Fauteuil roulant ou poussette selon la revendication 8 dans lequel le bloc de libération (78) est coulissant par rapport au dossier (56).

10. Fauteuil roulant ou poussette selon la revendication 9 dans lequel le bloc de libération (78) comprend une poignée (90).

11. Fauteuil roulant ou poussette selon la revendication 8 dans lequel l'élément de support (72) est une barre de support, et dans lequel le bloc de libération (78) a un composant concave adapté pour s'apparier avec la barre de support (72) pour bloquer le dossier dans une position dépliée.

12. Fauteuil roulant ou poussette selon la revendication 11 dans lequel le bloc de libération (78) est coulissant par rapport au dossier (56), et dans lequel le bloc de libération (78) comprend une poignée (90).

13. Fauteuil roulant ou poussette selon la revendication 8 comprenant des fentes (36) dans le plateau intérieur de siège (34) qui permettent de monter le plateau intérieur de siège (34) sur la base de siège en coquille (32) tout en permettant au plateau intérieur de siège (34) de coulisser dans des directions vers l'avant et vers l'arrière par rapport à la base de siège en coquille (32).

14. Fauteuil roulant ou poussette selon la revendication 1 dans lequel la base de siège en coquille (32) comprend des fentes sensiblement verticales opposées (74), les fentes sensiblement verticales étant orientées en faisant un angle par rapport à la verticale, l'angle étant dans la plage allant de 5° à environ 20°, l'élément de support arrière (72) ayant des extrémités s'étendant à travers les fente sensiblement verticales (74) de la base de siège en coquille (32) pour avoir un déplacement sensiblement vertical par rapport à la base de siège en coquille (32), et un déplacement vers le bas de l'élément de support arrière (72) verticalement dans les fentes sensiblement verticales (74) par rapport à la base de siège en coquille (32) amène le dossier (56) à pivoter au niveau des points de pivotement (62), inclinant ainsi le dossier (56), et amenant ainsi le plateau intérieur de siège (34) à coulisser vers l'avant par rapport à la base de siège en coquille (32).

15. Fauteuil roulant ou poussette selon la revendication 14 dans lequel les fentes (74) sont inclinées selon un angle vers l'avant de sorte que l'élément de support arrière (72) se déplace vers l'avant lorsque le dossier (56) s'incline et lorsque l'élément de support arrière (72) coulisse vers le bas dans les fentes (74).

16. Fauteuil roulant ou poussette selon la revendication 15, dans lequel le dossier (56) est un dossier pliant ayant une plaque arrière (58) et des bras de pivotement (60) qui sont reliés de manière pivotante au plateau intérieur de siège (34), la fixation pivotante permettant au dossier (56) de pivoter vers une position pliée.

17. Fauteuil roulant ou poussette selon la revendication 16 comprenant de plus un mécanisme de prise de siège pouvant être sélectivement actionné pour mettre en prise le dossier pliant (56) avec l'élément de support arrière (72), dans lequel lorsque que le mécanisme de mise en prise de siège est mis en prise, le dossier (56) est empêché d'être plié vers l'avant.

18. Fauteuil roulant ou poussette selon la revendication 17 dans lequel le mécanisme de mise en prise de siège est un bloc de libération (78) qui relie le dossier (56) à l'élément de support arrière (72), le bloc de libération (78) étant mobile par rapport au dossier (56) pour libérer le dossier (56) vis-à-vis de l'élément de support arrière (72), le dossier (56) comprenant une saisie de poignée (88) qui peut être saisie pour plier le dossier (56) vers l'avant, et le bloc de libération (78) comprenant une poignée de bloc de libération (90), la saisie de poignée (88) et la poignée de bloc de libération (90) étant positionnées pour permettre de saisir la saisie de poignée et la poignée de bloc de libération (78) à l'aide d'une main pour simultanément libérer le bloc de libération vis-à-vis de l'élément de support arrière (72) et plier le dossier (56) vers l'avant.

19. Fauteuil roulant ou poussette selon la revendication 18 dans lequel le bloc de libération (78) est coulissant par rapport au dossier (56).

20. Fauteuil roulant ou poussette selon la revendication 18 dans lequel l'élément de support arrière (72) est une barre de support, et dans lequel le bloc de libération (78) a un composant concave adapté pour être apparié avec la barre de support pour bloquer le dossier (56) dans une position dépliée.

21. Fauteuil roulant ou poussette selon la revendication 18 dans lequel le bloc de libération (78) est coulissant par rapport au dossier (56), et dans lequel le bloc de libération (78) comprend une poignée (90).

22. Fauteuil roulant ou poussette selon la revendication 1 dans lequel l'extrémité arrière de la base de siège en coquille (32) comprend des fentes sensiblement verticales opposées (74) ; l'élément de support arrière est une barre de support arrière (72) ayant des extrémités s'étendant à travers les fentes sensiblement verticales (74), la barre de support arrière (72) comprenant un mécanisme de blocage à chaque extrémité de la barre de support arrière (72) pour bloquer la barre de support arrière (72) dans tout emplacement vertical le long des fentes sensiblement verticales (74) dans la base de siège en coquille (32) ; les fentes sensiblement verticales (74) étant orientées selon un angle par rapport à la verticale, l'angle étant dans la plage allant d'environ 5° à environ 20° ; et la liaison entre le dossier (56) et l'élément de support arrière (72) est une liaison libérable, la libération du dossier (56) vis à vis de l'élément de support arrière de siège (72) permet au dossier (56) d'être plié par pivotement du dossier (56) autour des points de pivotement (62).

23. Fauteuil roulant ou poussette selon la revendication 22 comprenant un bloc de libération (78) qui relie le dossier (56) à l'élément de support arrière (72), le bloc de libération (78) étant mobile par rapport au dossier (56) pour libérer le dossier (56) vis-à-vis de l'élément de support arrière (72), le dossier (56) comprenant une saisie de poignée (88) qui peut être saisie pour plier le dossier (56) vers l'avant, et le bloc de libération (78) comprenant une poignée de bloc de libération (90), la saisie de poignée (88) et la poignée de bloc de libération (90) étant positionnées pour permettre de saisir la saisie de poignée (88) et la poignée de bloc de libération (90) à l'aide d'une main pour simultanément libérer le bloc de libération (78) vis-à-vis de l'élément de support arrière (72) et plier le dossier (56) vers l'avant.
